(19)

Europäisches
Patentamt
European
Patent Office
Office européen
des brevets

(11) **EP 2 879 323 A1**

(12) **EUROPEAN PATENT APPLICATION**

(43) Date of publication:
**03.06.2015 Bulletin 2015/23**

(51) Int Cl.:
**H04L 9/08** (2006.01)    **H04L 9/30** (2006.01)

(21) Application number: **13005596.5**

(22) Date of filing: **02.12.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ETH Zurich**
**8092 Zurich (CH)**

(72) Inventors:
• **Capkun, Srdjan**
  **CH - 8049 Zürich (CH)**
• **Androulaki, Elli**
  **CH -8052 Zürich (CH)**
• **Soriente, Claudio**
  **CH - 8037 Zürich (CH)**

(54) **Method and distributed data processing system for managing access to data**

(57)    A method for managing access to data, using public key cryptographic methods, has an encryption phase with:

• generating a ciphertext ($\langle\beta,\gamma\rangle$) by encrypting plaintext data ($\mathcal{F}$) with a tag-based encryption scheme using a recipient's public key ($pk_{uj}$), a location specific public key ($pk_{li}$) and a tag ($\tau_i$), the tag ($\tau_i$) defining a time window for decryption;
  A decryption phase with:
• A decryption authority ($Ls_i$ = A; B; C) receiving the ciphertext ($\langle\beta,\gamma\rangle$) and the tag ($\tau_i$) and the recipient's public key ($pk_{uj}$), verifying the recipient's identity and determining the recipient's location (A1; A2,.. ; B1, B2, ...).
• The decryption authority ($Ls_i$ = A; B; C) proceeding only if the current time (t) lies within the time window specified by the tag ($\tau_i$).
• The decryption authority ($Ls_i$ = A; B; C) generating an intermediate ciphertext ($\langle\alpha_{ij}, \beta_{ij}\rangle$) by decrypting the ciphertext ($\langle\beta, \gamma\rangle$) using the tag ($\tau_i$) and a location specific private key ($sk_{li}$) determined according to the recipient's location ($l_i$ = A1; A2,.. ; B1, B2, ...);
  A recipient decryption phase with:

• the recipient generating the plaintext data ($\mathbb{G} = \mathbb{QR}_N^+$,) by decrypting the intermediate ciphertext ($\langle\alpha_{ij}, \beta_{ij}\rangle$) with the recipient's private key ($sk_{uj}$).

$u_j(sk_{u_j})$   $Ls_{\ell_i}(sk_{\ell_i})$

$\leftarrow$ Auth. and Loc. $\rightarrow$

Retrieve $pk_{u_j}$

$\xrightarrow{\alpha_j, \langle\beta,\gamma\rangle, \tau_i}$

If $t \notin \tau_i$ then
  Abort
$\beta_* \leftarrow \text{TB.Dec}(sk_{\ell_i}; \langle\beta,\gamma\rangle; \tau_i)$

/*Re-randomize $\langle\alpha_j, \beta_*\rangle$*/
$r_{ij} \leftarrow_R \mathbb{Z}_{N/4}$
$\alpha_{ij} \leftarrow (pk_{u_j})^{r_{ij}}$
$\beta_{ij} \leftarrow \frac{\beta_*}{\beta} \cdot g^{r_{ij}}$

$\xleftarrow{\alpha_{ij}, \beta_{ij}}$

Store: $\langle\alpha_{ij}, \beta_{ij}\rangle$   **Fig. 4**

EP 2 879 323 A1

**Description**

The invention relates to the field of data access management using public-key cryptosystems, and in particular to a method and a distributed data processing system as described in the preamble of the corresponding independent claims.

Nowadays, many companies and users outsource their data to cloud storage providers, which renders effective access control mechanisms of crucial importance. Unfortunately, incidents of data-breaches from the cloud indicate that users should not trust the latter to enforce access control on their data. For conventional access policies, where access rights are based on user identities (or personal credentials), trust issues in cloud providers can be easily mitigated: data owners only need to encrypt their data under the (public) keys of the users who are authorized to access the data; if the encryption algorithm is secure and keys are properly distributed, access control is enforced correctly even if the cloud is compromised, and, e.g., encrypted data is leaked. However, when more complex access policies are involved, i.e., policies that refer to richer attributes than just user identities, realizing such a trust setting is not straightforward.

We focus on scenarios where granting access to data should not only consider the identity of the user but also contextual information such as the user's location and time of access. This is the case when, in various settings, security policies or legal requirements impose restrictions on the geographical region, as well as the time window, within which users are allowed to access the data. This may be the case of sensitive employee information of a company that should only be accessed within the company premises and during working hours. Similarly, in mobile voucher applications users are entitled to coupons only if they visit premium locations at given times.

Previous work to enforce contextual (e.g., location- and time-based) access control on cloud-stored data, is based on the assumption that the cloud provider has the means to locate users, and is trusted to enforce the policies correctly. On the one side, previous solutions overlook the trust issues outlined before. On the other side, their deployment may not be feasible as current cloud storage providers do not have the means to assess user location. A possible fix would be for the cloud storage provider to cooperate or to interface with any infrastructure that can provide localization functionalities (e.g., cellular network operators). However, cooperation between the cloud storage provider and a localization infrastructure may raise further trust or operational concerns.

It is therefore an object of the invention to create a method and a distributed data processing system for managing access to data of the type mentioned initially, which overcomes the disadvantages mentioned above.

These objects are achieved by a method and distributed data processing system according to the corresponding independent claims.

The method for managing access to data, using public key cryptographic methods, comprising the steps of, in an encryption phase,

- generating a ciphertext by encrypting plaintext data (for example, a computer readable file or message) with a tag-based encryption scheme using a recipient's (or user's) public key, a location specific public key and a tag, the tag defining a time window for decryption;
- making the ciphertext and the tag accessible to the recipient.

This step of making the ciphertext and the tag accessible to the recipient can be accomplished by uploading file to a publicly accessible storage location in the internet ("in the cloud") or by transmitting them to recipient in another way.

Then, in an authority controlled decryption phase, the method comprises the further steps of

- a decryption authority (or location authority) receiving the ciphertext and the tag and the recipient's public key;
- the decryption authority verifying the recipient's identity and determining the recipient's location;
- the decryption authority checking whether the current time lies within the time window specified by the tag, and proceeding with further decryption steps only if this is the case;
- the decryption authority generating an intermediate ciphertext by decrypting the ciphertext using the tag and a location specific private key determined according to the recipient's location;

The location specific private key is assigned to a geographical or spatial area determined by the recipient's location. If this location specific private key does not match the location specific public key with which the ciphertext was originally encrypted, the decryption step will fail.

The decryption authority (or location authority) can receive one or more of the ciphertext, the tag and the recipient's public key directly or indirectly from the recipient. This can be done by the recipient sending one or more of the ciphertext and the tag and the recipient's public key to the decryption authority, and by the decryption authority retrieving the remaining information items from a storage location based on information provided by the recipient.

Then, in a recipient decryption phase

- the recipient generates the plaintext data by decrypting the intermediate ciphertext with the recipient's private key.

In an embodiment, the method comprises the additional steps of in the encryption phase

- adding one or more further layers of encryption using further tags and optionally further location specific public keys, each location specific public key being associated with a tag;

in the authority controlled decryption phase

- repeating the steps of the authority controlled decryption phase at further times and optionally in associated further locations, thereby generating two or more intermediate ciphertexts;

in the recipient decryption phase

- aggregating the two or more intermediate ciphertexts and decrypting the result of this aggregation with the recipient's private key.

In the case of ElGamal encryption, the aggregation is implemented by a multiplication. More generally speaking, under other encryption schemes the aggregation operation is the group homomorphism for the respective group.

In an embodiment, in the step of the location authority generating the intermediate ciphertext, the location authority re-randomises the decrypted ciphertext using the recipient's public key, thereby generating the intermediate ciphertext. This re-randomisation has the effect of tying the server's response to the recipient's public key, introducing collusion resistance. In the recipient decryption phase, when decrypting the result of the aggregation with the recipient's private key, the server randomness that was introduced in the re-randomisation cancels out

In an embodiment, the method comprises the steps of
in the encryption phase

- using a first location specific public key as the location specific public key;

and prior to the authority controlled decryption phase

- (the recipient) re-encrypting the ciphertext to a second location specific public key.

The second location specific public key corresponds to a location at which the recipient is to be for the authority controlled decryption phase)

In a further embodiment, the plaintext is encrypted to multiple recipients, wherein each recipient can be associated with one or more sets of location specific public keys and tags. Consequently, each recipient can recover the plaintext independently if he visits the right locations at the right times.

The system and method shall be henceforth labelled as LoTAC, a novel framework that seamlessly integrates a cloud storage provider and a localization infrastructure to support location- and time-based access control for cloud-stored data. LoTAC avoids operational issues as the cloud provider and the localization infrastructure run independent systems that do not need to interact. The trust issues outlined before are also circumvented, as neither entity is completely trusted to enforce access policies to data. More specifically, LoTAC policies are defined by data owners and are enforced by means of encryption at the user-end. Thus, the cloud provider is only used and trusted to reliably store data, while the localization infrastructure is only trusted to accurately assess the user location. Finally, the data cannot be accessed by the cloud provider or the localization infrastructure, even when they collude.

LoTAC is realized through a set of cryptographic protocols that require no changes to the cloud storage provider and minimal changes in the operations of any localization infrastructure, what makes LoTAC protocols easily deployable. LoTAC policy enforcement is transparent to the infrastructure; that is, neither the cloud provider, nor the localization infrastructure are required or expected to be aware of the policy being enforced.

Protocols in LoTAC can use ElGamal encryption. A novel tag-based encryption scheme makes proposed protocols suited for resource-constrained user devices (e.g., smartphones).

Aspects of the invention can be summarized as follows:

- An architecture that enables users to define access control policies over their cloud-stored data, the access control policies including location and time of access. As opposed to existing systems, the present system seamlessly integrates a cloud storage provider and a localization infrastructure that operate independently, and minimizes trust to the system components. In addition, policy enforcement is transparent to all participating entities.

- A set of cryptographic protocols to realize the aforementioned architecture, and enforce contextual access control to data.

- An implementation of LoTAC where the localization infrastructure is realized as a cellular network operator. The protocols can be easily integrated within the current cellular infrastructure while requiring only minor changes to its operations. The protocols incur a small overhead to the users of the service.

**System Architecture:** The system involves of a cloud provider, a localization infrastructure, file owners and users.

*A cloud provider (CP)* offers basic storage services and can be instantiated by any storage provider (e.g., Amazon or Dropbox).

*A localization infrastructure (LI)* is able to identify and determine users' locations on a large scale (prominent examples are cellular network infrastructures).

*File owners (O)* upload content to the cloud and specify access policies that include an *access set* of users authorized to access content, and a *contextual policy* that defines the locations that authorized users should visit in order to access the data, and the corresponding temporal restrictions, i.e., the time periods when authorized user visit to each location should happen. For example, Alice can set a policy where only "Bob or Charlie" can access her file after visiting "San Francisco, CA on Monday" and "Los Angeles, CA on Tuesday".

*Users (U)* access data *on-the-go.* We assume users to carry a token that allows the localization infrastructure to assess their identity and position. Such a token can be a smartphone or other portable communication device. Users are granted or forbidden access to data depending on their identity, and their location(s) at the time(s) specified in the access policy.

**System properties:** A solution is established with the following system properties:

1. *Infrastructure independence.* The storage infrastructure can be separated from the localization infrastructure. This reflects the current state of cloud storage providers that neither maintain, nor cooperate with localization infrastructures.

2. *Policy transparency.* Both the cloud storage provider and the localization infrastructure are oblivious to the policy being enforced. In particular, the localization infrastructure should serve user requests only taking into account the user identity, her location and the time of request. Thus, for a file policy to be enforced, the localization infrastructure does not have to be aware of the details of the particular policy, nor it need it be aware of the file the user is trying to access.

3. *Deployability.* The proposed solution incurs minimal changes in operations of the cloud storage provider and the localization infrastructure. In addition, it can runs with minimal communication and computation overhead on (at least) the mobile user side.

**Trust assumptions and security properties.** In the present method and system, the cloud provider is trusted to reliably store data on behalf of file owners and make it available to any user upon request. The localization infrastructure is assumed to accurately assess users' identities and locations. To this end, we entrust user authentication and localization to the localization infrastructure. That is, we are agnostic to the authentication and localization mechanisms and assume they can detect attacks such as relay or sybil attacks. Although the cloud storage provider and the localization infrastructure are assumed to abide to protocol specifications, they (individually or in collusion) may try to access files uploaded by owners to the cloud provider. Users may be malicious and may collude together or with the cloud to escalate their access rights; nevertheless, we assume that colluding users do not share their secret keys. Users sharing secret keys are considered as sybils and we resort to the localization infrastructure to detect them. Thus, the following security goals can be achieved:

*Policy enforcement.* A user is able to access a file if and only if her identity is part of the access set of the file, and she complies with the contextual policy defined by the file owner.
*Collusion-resistance.* A set of colluding users is not be able to access a file unless at least one of them is in the file access set and satisfies the contextual policy of the file, i.e., one user satisfies *policy enforcement.*

Finally, we note that we do not account for cases where users who have rightfully obtained access to a file, leak the file to other parties.

**Candidate Solutions:** We now discuss a number of candidate solutions to our problem and argue why they fail to satisfy our requirements.

A straightforward solution would be for the localization infrastructure to provide users with proofs of locations as credentials. Therefore, a user would collect proofs of her presence at given locations during given times and would later present those credentials to the cloud provider. The latter would evaluate user credentials against the access policy of the file and either allow or deny access to the file. While simple and elegant, this solution fails to meet system properties 1 and 2. That is, the cloud provider must trust the localization infrastructure and is ultimately responsible for enforcing access control policies defined by file owners.

Another option would leverage ciphertext-policy attribute-based encryption (CP-ABE) and map each location and time pair to an attribute. In this scenario, the localization infrastructure would act as the key-authority and would be trusted to provide decryption keys to users according to the location they reside and current time. Although such an approach could work for location-based access control, managing more fine-grained attributes like time may result in an unbearable number of attributes. Furthermore, inherent key-escrow issues of ABE may allow the localization infrastructure to abuse its power and decrypt any ciphertext.

We discuss LoTAC with respect to system requirements, limitations and alternative instantiations of the localization infrastructure.

- *Policy transparency.* The cloud storage provider in LoTAC is not trusted to enforce any access control, hence it is completely oblivious of the access control policies of files. LoTAC also provides a high degree of policy transparency with respect to location servers. In particular, user requests to location servers contain a ciphertext and a tag. A location server is only required to check whether the time of request is compliant with the submitted tag; if not it refuses to cooperate. Otherwise, the reply of the location server is only based on that user public key and her location.

- *Deployability.* LoTAC can be deployed with no changes at the cloud storage provider and minimal changes to the localization infrastructure. In particular, the cloud storage provider can be instantiated by any cloud provider that offer storage services (e.g., Amazon or Dropbox). Using a cellular network operator as the localization infrastructure, LoTAC can leverage its authentication and localization framework. In this case the localization infrastructure only needs to set up location servers to serve users requests. We also note that the cloud storage provider and the localization infrastructure do not need to interact in any way.

- *Localization infrastructure.* We evaluate LoTAC when the localization infrastructure is instantiated by a cellular network operator. Nevertheless, any infrastructure that provides authentication and localization can be used. Sensor networks, RFID readers or trusted GPS, are all valid alternatives that LoTAC can leverage to provide location and time based access control. Location secret keys in LoTAC are partitioned among location servers. Each location server holds only the keys related to the locations that the server covers and is responsible for serving user requests originating from those locations. If the localization infrastructure is made of devices with low computational power (e.g., sensors) we can assume a single back-end server that holds all location secret keys and serves all user requests.

- *System Limitations.* The security of LoTAC is strongly dependent on the accuracy with which the localization infrastructure assesses user identities and locations. If the localization mechanism provides strong security guarantees, LoTAC allows for effective contextual policy enforcement.

- *Other applications of LoTAC protocols.* The application of LoTAC protocols is not restricted to the case of location- and time-based access control. More specifically, protocols used in LoTAC can be used to enforce any policy that requires certification of user properties or attributes from multiple third parties that do not interface with each other. In such scenarios, our protocols would offer the same trust and operational provisions as in LoTAC.

In an embodiment, a set of computer programs for implementing the method for managing access to data is loadable into internal memory of a set of distributed digital computers or computer systems. The computer programs comprise computer-executable instructions to cause one or more processors of the computer or computer system to execute the method for managing access to data. In another embodiment, a computer program product comprises one or more computer readable media having the computer-executable instructions recorded thereon. The one or more computer readable media preferably are non-transitory; that is, tangible. In still another embodiment, the one or more computer programs are embodied as a reproducible computer-readable signal, and thus can be transmitted in the form of such a signal.

Further embodiments are evident from the dependent patent claims. Features of the method claims may be combined with features of the system claims and vice versa.

The subject matter of the invention will be explained in more detail in the following text with reference to exemplary embodiments which are illustrated in the attached drawings, which show:

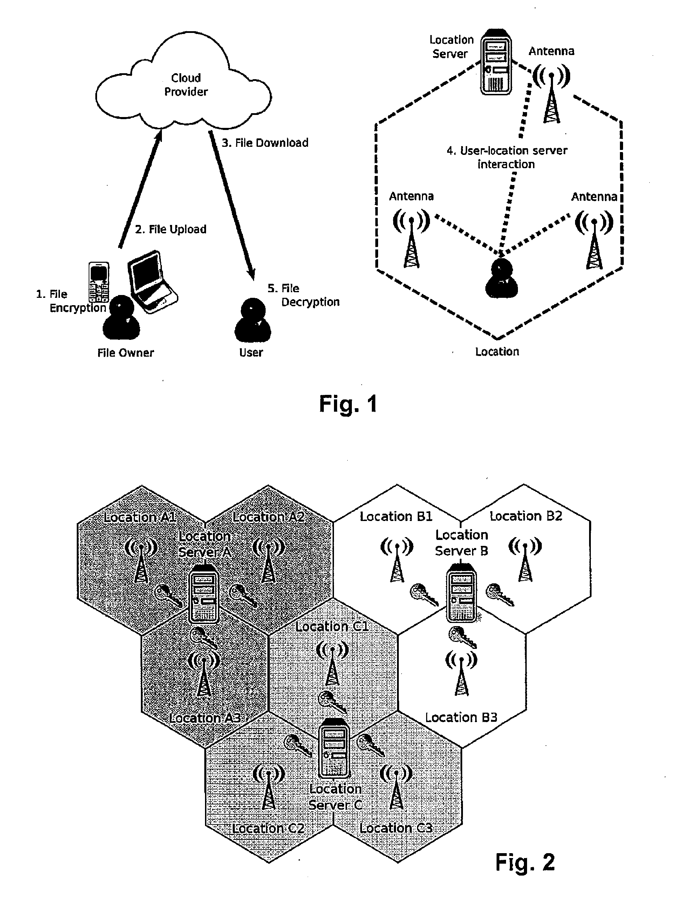

**Figure 1:** LoTAC architecture and operations. A file owner encrypts (1) and uploads a file to the cloud provider (2). A user downloads the file from the cloud (3) and interacts with the localization infrastructure to prove her location (4) before performing the final decryption (5). The user should be able to access the file only if her identity, location(s) and time of interaction with the location server(s) are compliant with the access policy of the file.

**Figure 2:** Localization infrastructure LI, which partitions the area where the service is provided in locations and assigns each location $l_i$ to a location server $Ls_i$. Each location is uniquely bound to a key-pair, whose private part is securely stored at the location server which covers that location. In the example, location server A covers locations A1, A2 and A3 and holds the relative private keys.

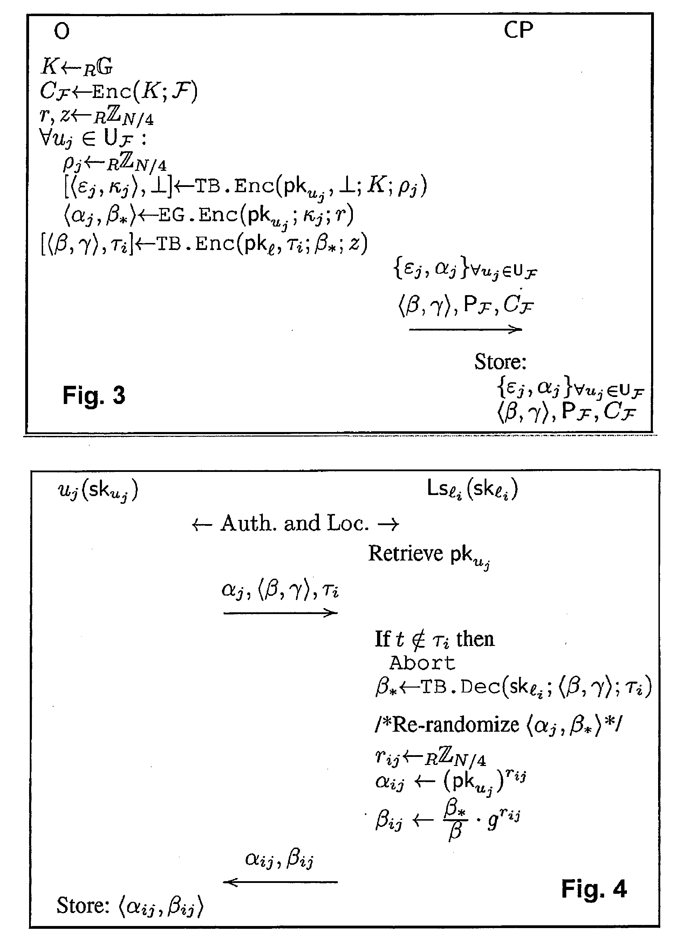

**Figure 3:** Pseudocode describing an interaction between the file owner and the cloud provider.

**Figure 4:** Pseudocode describing an interaction between the user and a location server.

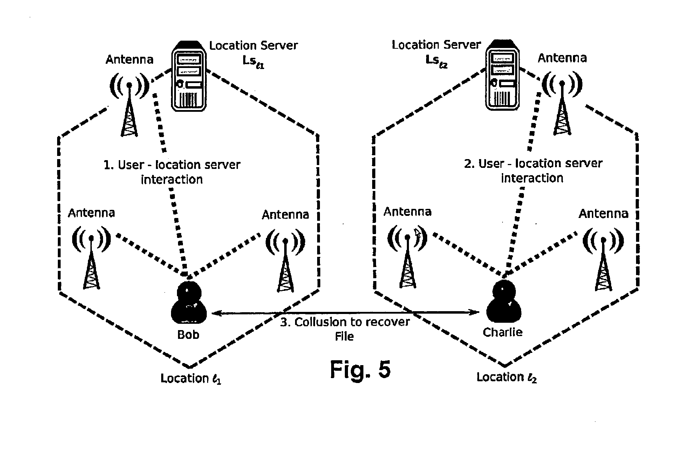

**Figure 5:** A collusion attack. The contextual policy includes location $l_1$ and location $l_2$, while the access set includes Bob and Charlie. None of them visits both locations. However Bob interacts with $Ls_1$ and Charlie interacts with $Ls_{12}$. Later on, they try to pool the answer received by the location server to access the file.

Figure 1 provides an overview of the system operation according to an embodiment. File owners upload files and the corresponding access control policies to a cloud provider. Users who wish to access a file must issue a request to the localization infrastructure from every location that is specified in the file policy. The localization infrastructure is assumed to serve each request based on the user identity, location, and time of request. Ultimately, a user succeeds to access the file only if her identity is within the access set, and her location and time of request(s) are compliant with the file contextual policy. Thus, in the previous example, Bob (or Charlie) can download the ciphertext from the cloud provider at any time. However, he must issue a first request to the localization infrastructure from San Francisco on Monday, and then from Los Angeles the day after, in order to access Alice's file.

We use ElGamal and a Tag-based variant of ElGamal over the group of signed quadratic residues $\mathbb{G} = \mathbb{QR}_N^+$, where $N = p \cdot q$ is a safe prime product, i.e., $p = 2 \cdot p'+1$ and $q = 2 \cdot q' + 1$, for $p'$, $q'$ prime numbers. The key generation algorithm is the same for both ElGamal schemes. Namely, given $g$ a generator of G, an ElGamal key-pair is defined as sk, pk = $g^{sk}$, where pk is the public key and sk $\in Z_{N/4}$ is the corresponding secret key.
**ElGamal.** The encryption and decryption operations of the ElGamal scheme are the following:

- $\langle \alpha, \beta \rangle \leftarrow$ EG. Enc(pk; m; r), is the encryption of a message m under public key pk; it picks a random $r \in \mathbb{Z}_{N/4}$ and computes $\langle \alpha, \beta \rangle = \langle m(pk)^r, g^r \rangle$. The value $\beta$ is referred to as the "ephemeral key".

- m$\leftarrow$EG. Dec(sk; $\langle \alpha, \beta \rangle$), is the decryption of ciphertext $\langle \alpha, \beta \rangle$ using secret key sk; it outputs $m = \frac{\alpha}{\beta^{sk}}$.

An ElGamal ciphertext can be "re-randomized", given the public key used during encryption. Assume $\langle \alpha = m(pk)^r, \beta = g^r \rangle$ is a ciphertext of message m under public key pk, encrypted with randomness r. It can be re-randomized picking random $r'$ and computing $\alpha' = \alpha \cdot pk^{r'} = m \cdot pk^{r+r'}$ and $\beta' = \beta^{r'} = g^{r+r'}$. The resulting ciphertext $\langle \alpha', \beta' \rangle$ is a valid ciphertext of message m under public key pk, encrypted with randomness $r + r'$.
**Tag-based ElGamal.** In tag-based encryption schemes [3], encryption and decryption algorithms take an additional (public) input referred to as *tag*. The latter is simply a binary string of appropriate length, and need not have any particular internal structure. We now introduce a novel tag-based encryption scheme based on hashed ElGamal. Apart from group G with generator $g$ as above, it also requires a collision resistant hash function H($\cdot$) : {0,1}* $\rightarrow$ G. The details of the encryption and decryption operations follow:

- $[c, \tau] \leftarrow$ TB. Enc(pk, $\tau$, m) is the encryption of a message m under public key pk with tag $\tau$. It picks a random $r \in \mathbb{Z}_{N/4}$, computes $c = \langle m \cdot H(pk^r, \tau), g^r \rangle$ and outputs $c, \tau$.

- m $\leftarrow$ TB. Dec(sk; c; $\tau$) is the decryption of ciphertext c with secret key sk and tag $\tau$. It parses c as $\langle \alpha, \beta \rangle$ and computes $m \leftarrow \frac{\alpha}{H(\beta^{sk}, \tau)}$.

The above scheme achieves tag-based non-malleability as defined in [3] in the random oracle model, under the Strong Diffie-Hellman assumption (SDH) [1]. Informally, a tag-based encryption scheme is *tag-based non-malleable* against adaptive chosen ciphertext attacks (TNM-CCA2) if an adversary is unable to create a ciphertext-tag pair $c$, $\tau$ with underlying plaintext related to that of the challenge ciphertext-tag pair $c^*, \tau^*$, but with $\tau \neq \tau^*$. Such an adversary is given access to a (unrestricted) decryption oracle before seeing the challenge ciphertext-tag pair; after seeing the challenge pair $c^*$, $\tau^*$, the decryption oracle only answers queries if the input tag $\tau$ is different from $\tau^*$.

Practically, tag-based encryption ensures that decryption of a message requires the same tag used during encryption. That is, if the original tag is forged, then decryption fails.

**Overview**

As mentioned in the previous section user authentication and localization in LoTAC are entrusted to the localization infrastructure.

While we are agnostic w.r.t the authentication mechanism, LoTAC requires that each user $u$ is identified with a public-private key pair (pk$_u$, sk$_u$), which, e.g., can be set during $u$'s registration with the localization infrastructure. Given that these keys are crucial for user identification and ultimately to access files, we assume that users in LoTAC do not share their private keys. In other words, we treat users who share keys as sybils and rely on the localization infrastructure to identify them.

Regarding user localization, we do not propose any secure localization mechanism, but we leverage the ability of the localization infrastructure to assess the user location accurately. We further assume that the localization infrastructure partitions the area where the service is provided in *locations* and assigns each location $\ell$ to a *location server* Ls$_\ell$. (For example, a location could be a GSM cell and the location server could be the base station controller behind the antennas that cover that cell.) That is, Ls$_\ell$ can accurately locate any user within $\ell$ and is responsible for serving user requests originated at $\ell$. Furthermore, the localization infrastructure maps each location $\ell$ to a public-private key pair (pk$_\ell$, sk$_\ell$), and the secret key sk$_\ell$ is stored at Ls$_\ell$. Figure 2 shows a sample configuration with three location servers, each in charge of three locations (depicted as tiles).

The main idea of LoTAC is to handle locations with location keys and time restrictions with the tags of a tag-based encryption scheme. Since tags in tag-based encryption can be any strings, we can encode arbitrary time restrictions in each tag. In particular, we first encrypt ciphertext for user $u$ under pk$_u$. We then add additional layer(s) of encryption based on the contextual policy. If the contextual policy contains a location-time tag pair $(\ell, \tau)$, we add an additional layer of encryption using public key pk$_\ell$, and tag $\tau$. If the contextual policy specifies multiple locations and time-tags, say $\{\ell_i, \tau_i\}_{i=1}^{i=m}$, LoTAC uses several layers of encryption, where the $i$-th layer uses public key pk$_{\ell_i}$ and tag $\tau_i$. Location server Ls$_{\ell_i}$, that handles sk$_{\ell_i}$, is the only party that can remove the encryption layer corresponding to $(\ell_i, \tau_i)$. Furthermore, it can do so only if it is given the original tag $\tau_i$ used during encryption.

When, at time $t$, the user provides the ciphertext along with the tag $\tau_i$ to Ls$_{\ell_i}$, we trust the location server to evaluate whether the current time is compatible with the provided tag $\tau_i$. (Note that the security of the tag-based encryption scheme prevents the user from forging the tag, i.e., the user cannot forge the time in the contextual policy.) If $t$ is compatible with $\tau_i$, the location server uses its secret key to remove the encryption layer. Therefore, for $1 \leq i \leq m$, the user is required to contact each location server in charge of location $\ell_i$ at a time compatible with tag $\tau_i$, in order to remove all the encryption layers related to the contextual policy.

Clearly, the solution sketched above does not account for collusion resistance. More specifically, consider a ciphertext encrypted under user public key pk$_u$ (i.e., $u$ is an authorized user) and contextual policy P = $\{\ell, \tau\}$. A user $u'$ (that is not among the authorized users) can still requests the location server that covers $\ell$ to remove a layer of encryption from the ciphertext. If $u'$ is in $\ell$ at a time compatible with $\tau$, the location server agrees to serve the request. At this time, $u'$ can just forward the response received by the location server to $u$. The latter can use her secret key to remove the inner layer of encryption and access the cleartext. To provide collusion resistance, LoTAC protocols can use ElGamal encryption in a group of composite order, and have each location server bind its response to the public key of the user that issues the decryption request. Binding is such that answers of a location server to a user $u'$ cannot be transferred to or used by another user $u$.

**Basic Protocols**

We assume that the localization infrastructure LI instantiates ElGamal in group G with generator $g$. It also picks a hash function H ($\cdot$) to map arbitrary strings to G, for the tag-based version of ElGamal. Each user $u_j$ has an ElGamal key pair (sk$_{uj}$, pk$_{uj}$ = $g^{sk_{uj}}$), with sk$_{uj} \in Z_{N/4}$, which can be chosen by $u_j$ during a one-time registration protocol with the

localization infrastructure. The LI also maps each location $\ell_i$ to an ElGamal key-pair $(\mathrm{sk}_{\ell_i}, \mathrm{pk}_{\ell_i} = g^{\mathrm{sk}}\ell_i)$; the secret key $\mathrm{sk}_{\ell_i} \in \mathbb{Z}_{N/4}$ is securely delivered to the location server that covers $\ell_i$, let it be $\mathrm{Ls}_{\ell i}$.

**Encryption.** The file owner specifies an access set $\mathsf{U}_{\mathcal{F}}$ with the identities of the users authorized to access the file and a contextual policy $\mathsf{P}_{\mathcal{F}}$ with location-time tags pairs. For now we assume $\mathsf{P}_{\mathcal{F}}$ to have only one pair $(\ell_i, \tau_i)$; later we will show how to accommodate multiple pairs.

Encryption and upload of file $F$ to the cloud provider are depicted in Figure 3: Owner O encrypts $\mathcal{F}$ so that $u$ can only decrypt once in location $\ell_i$ at a time compatibe with $\tau_i$; the ciphertext is uploaded to the cloud provider CP Owner O generates a key

$K$ and encrypts $F$ using a semantically secure encryption cipher with encryption and decryption algorithms Enc, Dec, respectively. That is, O randomly chooses $K$ and computes $C_{\mathcal{F}} \leftarrow \mathrm{Enc}(K; \mathcal{F})$. Next, for each user $u_j \in \mathsf{U}_{\mathcal{F}}$, O randomly chooses $\rho_j \in \mathbb{Z}_{N/4}$ and computes:

$$[\langle \varepsilon_j, \kappa_j \rangle, \bot] \leftarrow \mathrm{TB.Enc}(\mathrm{pk}_{u_j}, \bot; K; \rho_j),$$

where $\bot$ denotes the empty tag. Next, O randomly chooses $r \in Z_{N/4}$, sets $\beta_* = g^r$, and $\forall\, u_j \in \mathsf{U}_{\mathcal{F}}$ computes:

$$\langle \alpha_j, \beta_* \rangle \leftarrow \mathrm{EG.Enc}(\mathrm{pk}_{u_j}; \kappa_j; r),$$

In the following, we refer to $\langle \{\varepsilon_j, \alpha_j\}_{\forall u_j \in \mathsf{U}_{\mathcal{F}}}, \beta_* \rangle$ as the $\mathsf{U}_{\mathcal{F}}$-ciphertext, while $\langle \varepsilon_j, \alpha_j, \beta^* \rangle$ is the part of the $\mathsf{U}_{\mathcal{F}}$-ciphertext that corresponds to $u_j$. The (shared) ephemeral key $\beta^*$ is then encrypted under the public key of location $\ell_i$, using $\tau_i$ as a tag and a randomly chosen $z \in Z_{N/4}$:

$$[\langle \beta, \gamma \rangle, \tau_i] \leftarrow \mathrm{TB.Enc}(\mathrm{pk}_{\ell}, \tau_i; \beta_*; z)$$

We refer to $\beta, \gamma \rangle$ as $\mathsf{P}_{\mathcal{F}}$-ciphertext. Finally, O uploads to the cloud provider CP:

$$\{\varepsilon_j, \alpha_j\}_{\forall u_j \in \mathsf{U}_{\mathcal{F}}}, \langle \beta, \gamma \rangle, \mathsf{P}_{\mathcal{F}}, \text{ and } C_{\mathcal{F}},$$

where $\mathsf{P}_{\mathcal{F}}$ contains the ID of location $\ell_i$ and the corresponding time restriction tag $\tau_i$.

**User-location server interaction.** This is an interactive protocol that occurs at time $t$ between user $u_j$, located at $\ell_i$, and location server $\mathrm{Ls}_{\ell i}$, that covers location $\ell_i$. Interaction between the two parties is depicted in Figure 4. Interaction between user $u_j$ with private input $\mathrm{sk}_{u_j}$ and location server $\mathrm{Ls}_{\ell_i}$ with secret input $\mathrm{sk}_{\ell_i}$. Interaction happens at time $t$. We assume that $u_j$ has already downloaded the -ciphertext that corresponds to her public key, the $\mathsf{P}_{\mathcal{F}}$-ciphertexts, and $C_{\mathcal{F}}$ from the cloud provider.

$\mathrm{Ls}_{\ell i}$ authenticates $u_j$, and locates her within $\ell_i$. We stress that we are agnostic to the means that the localization infrastructure uses to authenticate and locate the user.

At this time $\mathrm{Ls}_{\ell i}$ knows the public key of $u_j$ (i.e., $\mathrm{pk}_{uj}$).

After authentication and localization, $u_j$ submits $\{\alpha_j, \langle \beta, \gamma \rangle, \tau_i\}$ to $\mathrm{Ls}_{\ell i}$. The location server checks if current time $t$ is compatible with tag $\tau_i$. If this is not the case, $\mathrm{Ls}_{\ell i}$ aborts. Otherwise it uses the secret key of $\ell_i$ and tag $\tau_i$ to decrypt the $\mathsf{P}_{\mathcal{F}}$-ciphertext $\langle \beta, \gamma \rangle$ and remover $\beta_*$, i.e., the ephemeral key of the $\mathsf{U}_{\mathcal{F}}$-ciphertext:

$$\beta_* \leftarrow \mathrm{TB.Dec}(\mathrm{sk}_{\ell}; \langle \beta, \gamma \rangle; \tau_i)$$

Next, $Ls_{\ell_i}$ re-randomizes the recovered ciphertext $\langle\alpha_j,\beta_*\rangle$ under $pk_{u_j}$, in order to bind its response to the public key of $u_j$. That is $Ls_{\ell_i}$ computes:

$$\alpha_{ij} \leftarrow (pk_{u_j})^{r_{ij}}, \text{ and } \beta_{ij} \leftarrow \frac{\beta_*}{\beta} \cdot g^{r_{ij}},$$

where $r_{ij} \in Z_{N/4}$ is randomly chosen. $Ls_{\ell_i}$ responds to $u_j$ with $\langle\alpha_{ij},\beta_{ij}\rangle$.

**Decryption.** Finally, $u$ decrypts the re-randomized $U_{\mathcal{F}}$-ciphertext to recover symmetric key $K$:

$$\kappa_j \leftarrow \texttt{EG.Dec}(sk_{u_j}; \langle\alpha_j\alpha_{ij}, \beta\beta_{ij}\rangle)$$

$$K \leftarrow \texttt{TB.Dec}(sk_{u_j}; \langle\varepsilon_j, \kappa_j\rangle; \perp).$$

Key $K$ is then used to decrypt $C_{\mathcal{F}}$:

$$\mathcal{F} \leftarrow \texttt{Dec}(K; C_{\mathcal{F}}).$$

### Extensions

In this section we show how to extend the above protocols to accommodate policies with conjunctions or disjunctions of location-time tag pairs.

### Conjunction of locations-time tags

LoTAC can accommodate conjunction of multiple locations, each with a time restriction. Assume the contextual policy to be $P_{\mathcal{F}} = \{\ell_i, \tau_i\}_{i=1}^{i=m}$. In this case, the ephemeral key of the -ciphertext (i.e., $\beta_*$) is encrypted in multiple layers, where the *i*-th layer of encryption is added using public key $pk_{\ell_i}$ and tag $\tau_i$. Therefore, for an authorized user to access a file, she must visits *all* locations in the contextual policy at the right time. That is, user $u_j \in U_{\mathcal{F}}$ must contact each server $Ls_{\ell_i}$ (which covers $\ell_i$) from $\ell_i$ at a time compatible with time restrictions $\tau_i$, for $1 \leq i \leq m$. Each location server $Ls_{\ell_i}$ processes the request from $u_j$ as above and responds with $\alpha_{ij}, \beta_{ij}$. After contacting all location servers specified in $P_{\mathcal{F}}$, user $u_j$ decrypts $\langle\alpha_j \prod_{i=1}^{i=n}\alpha_{ij}, \beta \prod_{i=1}^{i=n}\beta_{ij}\rangle$ with her secret key and recovers $K$; the latter is used to decrypt ciphertext $C_{\mathcal{F}}$ and recover $\mathcal{F}$.

### Disjunction of locations

LoTAC manages spatial restrictions at a granularity of locations and enforces that each location in the contextual policy is visited during a given time (specified by the relative time tag). In this section we show how to handle disjunction of locations. This is particularly desirable when the access policy requires a more *coarse-grained* granularity. For example, if locations are mapped to neighborhoods and the contextual policy must cover a whole city, then an authorized user would comply with the policy if she resides in *any* neighborhood of that city (thus, contacting any location server that covers a neighborhood in the city). LoTAC enables users to define "macro-location" $L = \{\ell_1\} \cup ... \cup \{\ell_m\}$, and allows an authorized user to access the file as long as she resides in *any* location of $L$.

A naive way to handle disjoint locations would be to have one $P_{\mathcal{F}}$-ciphertext per location. That is, the ephemeral key of the -ciphertext is encrypted multiple times, each time with a different location key. When a user engages in a decryption protocol with $Ls_{\ell_i}$, she must submit the appropriate $P_{\mathcal{F}}$-ciphertext, i.e., the one encrypted under $pk_{\ell_i}$. The main drawback of this option is that the number of $P_{\mathcal{F}}$-ciphertexts grows linearly with the number of locations in $L$.

Another option would be for the localization infrastructure to define a public key $pk_L$ for each macro location $L$, and provide the correspondent secret key $sk_L$, to each location server $Ls_{\ell_i}$ that covers $\ell_i \in L$. This option has two drawbacks. One is that location servers are required to store more secret material. (This might be an issue if we account for compromise of location servers.) Another drawback is that, at decryption time, the user must tell the location server which of its secret keys to apply (e.g., either $sk_{\ell_i}$ or $sk_L$), while we want location servers to be oblivious with respect to the contextual policy.

Hence, we borrow from techniques of proxy re-encryption [2] and allow users to re-encrypt a $P_{\mathcal{F}}$- -ciphertext encrypted under a macro-location public key $pk_L$, in a ciphertext that corresponds to the same plaintext but encrypted under a location public key $pk_{\ell_i}$, as long as $\ell_i \in L$. In particular, for each macro-location $L$, the localization infrastructure (who knows the factorization of the composite modulus) publishes public key $pk_L$, and a set of re-encryption keys $\{rk_{\ell_i \leftarrow L}\}_{\ell_i \in L}$. A re-encryption key for location $\ell_i$ within macro-location $L$ is computed as $rk_{\ell_i \leftarrow L} = sk_{\ell_i}^{-1} \cdot sk_L$.

Encryption is performed using the macro-location public key $pk_L$. To decrypt $\mathcal{F}$, user $u_j$ who resides in any $\ell_i \in L$ runs the protocol detailed above with location server $Ls_{\ell_i}$, but now she uses the appropriate re-encryption key $rk_{\ell_i \leftarrow L}$ to pre-pocess her request. More specifically, $u_j$ submits to $Ls_{\ell_i}$ tuple $\alpha_j$, $\langle \beta, \gamma' \rangle$, $\tau_i$ where $\gamma' = (\gamma)^{rk_{\ell_i \leftarrow L}}$. That is, the $P_{\mathcal{F}}$- -ciphertext $\langle \beta, \gamma \rangle$ that encrypts $\beta_*$ under public key $pk_L$, is re-encrypted in a ciphertext $\langle \beta, \gamma' \rangle$ that encrypts $\beta_*$ under public key $pk_{\ell_i}$. Re-encryption keys could be easily extended to create a hierarchy of macro-locations. Continuing with the example of locations mapped to neighborhoods, one could think of a set of re-encryption keys to map public keys of neighborhoods to the public key of a city; another set to map the public keys of different cities to the public key of the county, etc. Re-encryption keys can be published by the localization infrastructure and fetched on demand by users, right before engaging in an interactive protocol with a location server. Note that computations in LoTAC are modulo a composite integer so that re-encryption keys are "uni-directional". This means that, given $rk_{\ell_i \leftarrow L}$, a ciphertext under $pk_L$ can be re-encrypted under $pk_{\ell_i}$ as long as $\ell_i \in L$, but the inverse is not possible.

**Security**

The security of our protocols requires that an encrypted file cannot be recovered by a user who is not in the file access set $(U_{\mathcal{F}})$, and does not fully comply with the file contextual policy $(P_{\mathcal{F}})$, i.e., she does not interact with each location server specified in the contextual policy at a time that is compatible with the corresponding time tag. This security definition is extended to colluding users where, in order to access a file, we require that at least one member of the colluding group is in the file access set and satisfies the contextual policy defined for the file.

We stress that we do not account for malicious users that share their secret keys. We consider users that share secret keys to be sybils and resort to the localization infrastructure to identify them. Nevertheless, we consider a set of (authorized) malicious users that visit only *some* of the locations in the contextual policy and try to pool the responses received by the location servers to escalate their access rights. This scenario is depicted in Figure 5 where Bob and Charlie are both authorized users for a file with a contextual policy that includes pairs $\langle \ell_1, \tau_1 \rangle$ and $\langle \ell_2, \tau_2 \rangle$. While none of them is fully compliant with the policy (i.e., none of them visits both location $\ell_1$ and $\ell_2$ at the right times), each one of them may visit a subset of the locations in $P_{\mathcal{F}}$, and later they may try to collude to access the file. For example, Bob visits location $\ell_1$, at a time compatible with $\tau_1$ while Charlie visits location $\ell_2$ at a time compatible with $\tau_2$. Afterwards, they try to pool the answers received by the respective location servers, to escalate their access rights.

This scenario constitutes the basis for our security game. In particular, we consider an adversary who specifies the access set $U_{\mathcal{F}}$, and the contextual policy $P_{\mathcal{F}}$ for the challenge ciphertext, as well as the set of users it corrupts $\hat{U}$. The latter can be equal to $U_{\mathcal{F}}$, so that the adversary learns the secret keys of all users in the access set. To model the scenario where no single corrupted user complies with the contextual policy, we assume that each user in the colluding set, at best, *misses* one pair $(\ell_i, \tau_i) \in P_{\mathcal{F}}$. In other words (authorized) user $\hat{u} \in \hat{U}$ visits all but one of the locations in $P_{\mathcal{F}}$ within the right time interval, but fails to visit one location, say $\ell_i$, at a time compatible with time-tag $\tau_i$ specified in $P_{\mathcal{F}}$. Note that user $\hat{u}$ can still visit location $\ell_i$ at a time that is not compatible with $\tau_i$. Therefore, in our security game, we require the adversary to define, for each corrupted user $\hat{u}$, the location time-tag pair $\hat{u}$ does not comply with.

The interaction between a user and a location server is modeled through a ServerDecrypt oracle. In particular, a ServerDecrypt query has the form

$$\langle \alpha_{ij}, \beta_{ij} \rangle \leftarrow \mathrm{ServerDecrypt}(\ell_i, \langle \alpha_j, \beta, \gamma \rangle, \tau, \mathrm{pk}_{u_j}),$$

and mimics the protocol of Fig. ?? where the location server who handles location $\ell_i$ serves a request for ciphertext $\langle \alpha_j, \beta, \gamma, \tau \rangle$ from user $u_j$, who resides in $\ell_i$.

The security game of LoTAC follows:

1. **Init.** The challenger sets up public parameters $g$, G, $N$, H($\cdot$) and defines public-private key pairs for all users and location servers. Public parameters as well as public keys are handed to the adversary.

2. **Corrupt.** The adversary picks the set of users to corrupt U and gets their secret keys.

3. **Challenge.** The adversary picks $\mathsf{U}_{\mathcal{F}}$ of size $n$ and $\mathsf{P}_{\mathcal{F}} = \left\{ \langle \ell_i, \tau_i \rangle \right\}_{i=1}^{i=m}$. For each $\langle \ell_i, \tau_i \rangle \in \mathsf{P}_{\mathcal{F}}$, the adversary also specifies $\hat{U}_i$, i.e., the set of users in $\hat{U}$ who cannot comply with pair $\langle \ell_i, \tau_i \rangle$.

The challenger picks a random message m and encrypts it under access set $\mathsf{U}_F$ and contextual policy $\mathsf{P}_{\mathcal{F}}$.

4. The adversary has restricted access to oracle ServerDecrypt. In particular, she cannot submit a ServerDecrypt query with arguments $(\ell_i, \langle \alpha_j, \beta, \gamma \rangle, \tau_i, \mathrm{pk}_{uj})$, where $u_j \in \hat{U}_i$, and $\langle \ell_i, \tau_i \rangle \in \mathsf{P}_F$.

5. **Guess.** The adversary outputs m' and wins if m = m'.

Throughout the game, the adversary has also unrestricted access to an H($\cdot$) oracle, which mimics the fact that the adversary may encrypt messages of its choice under our Tag-based ElGamal scheme. For simplicity, we omit this oracle in the above game.

We say that *LoTAC is secure if there is no p.p.t. algorithm A that has non-negligible advantage in winning the above game.*

**Evaluation**

The localization infrastructure is implemented by a cellular network infrastructure. System setup requires the localization infrastructure to pick public parameters (i.e., $g$, G, $N$, H($\cdot$)) and to compute location key pairs $\mathrm{sk}_{\ell_i}$, $\mathrm{pk}_{\ell_i}$ for each location $\ell_i$. Secret key $\mathrm{sk}_{\ell_i}$ is securely delivered to the location server that covers $\ell_i$, while $\mathrm{pk}_{\ell_i}$ is published. We also assume user public keys to be available, e.g., on a public repository hosted by the localization infrastructure. Furthermore, as we leverage the SIM-based authentication mechanisms employed by current cellular network operators, we only require that the cellular network operator maintains a correspondence between the symmetric key stored in the user SIM card with that user public key.

Table 1 provides the computation overhead imposed by LoTAC, given $n$ authorized users (i.e., $\| \mathsf{U}_{\mathcal{F}} \| = n$) and $m$ location-time tag pairs in the contextual policy $\mathsf{P}_{\mathcal{F}}$. Computation overhead does not account for AES encryption since we assume it to be negligible [4, 5]. According to Table 1, file encryption overhead is dominated by

| | Exp. / Mult. | Hash |
|---|---|---|
| **Encption** (O) | $3n+m+2$ / $2n+m$ | $n+m$ |
| **Interaction** Ls$_{\ell}$-$u_j$ | 3 / 3 | 1 |
| **Decryption** ($u_j$) | 2 / $2m + 3$ | 1 |
| Table 1: Computation overhead with $\| \mathsf{U}_{\mathcal{F}} \| = n$ and $\| \mathsf{P}_{\mathcal{F}} \| = m$. | | |

a number of exponentiations linear in the size of $\mathsf{U}_{\mathcal{F}}$ and the size of $\mathsf{P}_{\mathcal{F}}$. The overhead at the location server to process a user request is constant. On the other hand, the user overhead for decryption is slightly affected by the size of $\mathsf{P}_{\mathcal{F}}$, i.e., only two multiplications are added for each location-time tag pair of $\mathsf{P}_{\mathcal{F}}$.

|  | Ciphertext | Policy |
|---|---|---|
| Upload | $2(n+1)l_G$ | $m(l_\ell+l_\tau)$ |
| Download | $4l_G$ | $m(l_\ell+l_\tau)$ |
| $u \rightarrow \mathrm{Ls}_\ell$ | $3l_G+l_\tau$ | - |
| $u \leftarrow \mathrm{Ls}_\ell$ | $2l_G$ | - |
| Table 2: Communication overhead with $\|U_{\mathcal{F}}\| = n$ and $\|P_{\mathcal{F}}\| = m$. $l_G, l_\ell, l_\tau$ denote the length of elements in G, length of location IDs, and length of time tags, respectively. | | |

Table 2 summarizes the communication overhead incurred in LoTAC. We do not account for the upload of the AES-encrypted file, as it has roughly the same size as the plaintext file. File owners upload to the cloud provider the ciphertext of symmetric key $K$ (indicated by column "Ciphertext") and the contextual policy file $P_{\mathcal{F}}$ (indicated by column "Policy"). The latter includes the IDs of the locations to be visited (each of size $l_\ell$) and tags that define time restrictions (each of size $l_\tau$). At download time, apart from the AES-encrypted file, a user downloads the contextual policy file $P_{\mathcal{F}}$, the $P_{\mathcal{F}}$-ciphertext, and only the -ciphertext encrypted under her public key. Downloaded data size is proportional to $\|P_{\mathcal{F}}\|$. Table 2 also shows constant communication overhead during interactions between a user and a location server.

**References**

[1] M. Abdalla, M. Bellare, and P. Rogaway. The oracle diffie-hellman assumptions and an analysis of DHIES. In The Cryptographer's Track at RSA Conference (CT-RSA), pages 143-158, 2001.

[2] M. Blaze, G. Bleumer, and M. Strauss. Divertible protocols and atomic proxy cryptography. In International Conference on the Theory and Application of Cryptographic Techniques (EUROCRYPT), pages 127-144, 1998.

[3] P. MacKenzie, M. Reiter, and K. Yang. Alternatives to non-malleability: Definitions, constructions, and applications (Extended Abstract). In Theory of Cryptography (TCC), pages 171-190. 2004.

[4] B. Schneier and D. Whiting. A performance comparison of the five aes finalists. In AES Candidate Conference, pages 123-135, 2000.

[5] Z. Wang, R. Murmuria, and A. Stavrou. Implementing and optimizing an encryption file system on android. In IEEE International Conference on Mobile Data Management (MDM), pages 52-62, 2012.

**Claims**

1. A method for managing access to data, using public key cryptographic methods, comprising the steps of
in an encryption phase,

&bull; generating a ciphertext ($\langle\beta, \gamma\rangle$) by encrypting plaintext data ($\mathcal{F}$) with a tag-based encryption scheme using a recipient's public key ($pk_{uj}$), a location specific public key ($pk_{li}$) and a tag ($\tau_i$), the tag ($\tau_i$) defining a time window for decryption;
&bull; making the ciphertext ($\langle\beta, \gamma\rangle$) and the tag ($\tau_i$) accessible to the recipient;

in an authority controlled decryption phase,

• a decryption authority ($\mathrm{Ls}_i$ = A; B; C) receiving the ciphertext ($\beta, \gamma\rangle$) and the tag ($\tau_i$) and the recipient's public key ($pk_{uj}$);
&bull; the decryption authority ($\mathrm{Ls}_i$ = A; B; C) verifying the recipient's identity and determining the recipient's location (A1; A2,.. ; B1, B2, ...);

• the decryption authority ($Ls_i$ = A; B; C) checking whether the current time (t) lies within the time window specified by the tag ($\tau_i$), and proceeding with further decryption steps only if this is the case;

• the decryption authority ($Ls_i$ = A; B; C) generating an intermediate ciphertext ($\langle \alpha_{ij}, \beta_{ij} \rangle$) by decrypting the ciphertext ($\langle \beta, \gamma \rangle$) using the tag ($\tau_i$) and a location specific private key ($sk_{li}$) determined according to the recipient's location ($l_i$ = A1; A2,.. ; B1, B2, ...);

in a recipient decryption phase

• the recipient generating the plaintext data ($\mathcal{F}$) by decrypting the intermediate ciphertext ($\langle \alpha_{ij}, \beta_{ij} \rangle$) with the recipient's private key ($sk_{uj}$).

2. The method of claim 1 comprising the additional steps of:
in the encryption phase

• adding one or more further layers of encryption using further tags ($\tau_i$) and optionally further location specific public keys, each location specific public key being associated with a tag ($\tau_i$);

in the authority controlled decryption phase

• repeating the steps of the authority controlled decryption phase at further times and optionally in associated further locations, thereby generating two or more intermediate ciphertexts ($\langle \alpha_{ij}, \beta_{ij} \rangle$);

in the recipient decryption phase

• aggregating the two or more intermediate ciphertexts ($\langle \alpha_{ij}, \beta_{ij} \rangle$) and decrypting the result of this aggregation with the recipient's private key ($sk_{uj}$).

3. The method of claim 2 wherein, in the step of the decryption authority ($Ls_i$ = A; B; C) generating the intermediate ciphertext ($\langle \alpha_{ij}, \beta_{ij} \rangle$), the decryption authority ($Ls_i$ = A; B; C) determines a recovered ciphertext ($\langle \alpha_j, \beta^* \rangle$) by decrypting the ciphertext ($\langle \beta, \gamma \rangle$) using the tag ($\tau_i$) and the location specific private key ($sk_{li}$) determined according to the recipient's location, and re-randomises the recovered ciphertext ($\langle \alpha_j, \beta^* \rangle$) using the recipient's public key ($pk_{uj}$), thereby generating the intermediate ciphertext..

4. The method of one of claims 1 through 3 comprising the steps of, in the encryption phase

• using a first location specific public key ($pk_{l1}$) as the location specific public key;

and prior to the authority controlled decryption phase

• re-encrypting the ciphertext to a second location specific public key ($pk_{l2}$).

5. The method of one of the preceding claims, wherein the step of verifying the recipient's identity is implemented by a cellular network system.

6. A distributed data processing system for managing access to data, using public key cryptographic methods, said data processing system being programmed to perform the steps of one of the preceding claims.

**Fig. 1**

**Fig. 2**

**O**                                                               **CP**

$K \leftarrow_R \mathbb{G}$

$C_{\mathcal{F}} \leftarrow \mathrm{Enc}(K; \mathcal{F})$

$r, z \leftarrow_R \mathbb{Z}_{N/4}$

$\forall u_j \in \mathsf{U}_{\mathcal{F}}:$

   $\rho_j \leftarrow_R \mathbb{Z}_{N/4}$

   $[\langle \varepsilon_j, \kappa_j \rangle, \bot] \leftarrow \mathrm{TB.Enc}(\mathrm{pk}_{u_j}, \bot; K; \rho_j)$

   $\langle \alpha_j, \beta_* \rangle \leftarrow \mathrm{EG.Enc}(\mathrm{pk}_{u_j}; \kappa_j; r)$

$[\langle \beta, \gamma \rangle, \tau_i] \leftarrow \mathrm{TB.Enc}(\mathrm{pk}_\ell, \tau_i; \beta_*; z)$

$\{\varepsilon_j, \alpha_j\}_{\forall u_j \in \mathsf{U}_{\mathcal{F}}}$

$\langle \beta, \gamma \rangle, \mathsf{P}_{\mathcal{F}}, C_{\mathcal{F}}$

$\longrightarrow$

Store:

$\{\varepsilon_j, \alpha_j\}_{\forall u_j \in \mathsf{U}_{\mathcal{F}}}$

$\langle \beta, \gamma \rangle, \mathsf{P}_{\mathcal{F}}, C_{\mathcal{F}}$

**Fig. 3**

---

$u_j(\mathrm{sk}_{u_j})$                                            $\mathsf{Ls}_{\ell_i}(\mathrm{sk}_{\ell_i})$

$\leftarrow$ Auth. and Loc. $\rightarrow$

Retrieve $\mathrm{pk}_{u_j}$

$\alpha_j, \langle \beta, \gamma \rangle, \tau_i$

$\longrightarrow$

If $t \notin \tau_i$ then

   Abort

$\beta_* \leftarrow \mathrm{TB.Dec}(\mathrm{sk}_{\ell_i}; \langle \beta, \gamma \rangle; \tau_i)$

/*Re-randomize $\langle \alpha_j, \beta_* \rangle$*/

$r_{ij} \leftarrow_R \mathbb{Z}_{N/4}$

$\alpha_{ij} \leftarrow (\mathrm{pk}_{u_j})^{r_{ij}}$

$\beta_{ij} \leftarrow \dfrac{\beta_*}{\beta} \cdot g^{r_{ij}}$

$\alpha_{ij}, \beta_{ij}$

$\longleftarrow$

                                           **Fig. 4**

Store: $\langle \alpha_{ij}, \beta_{ij} \rangle$

**Fig. 5**

<table>
<tr><td>Europäisches Patentamt<br>European Patent Office<br>Office européen des brevets</td><td style="text-align:center">**EUROPEAN SEARCH REPORT**</td><td>**Application Number**<br><br>EP 13 00 5596</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,O | Daniela Meier: "Realizing and Implementing Location-based Access Control Policies Master Thesis",<br><br>25 September 2013 (2013-09-25), pages 1-71, XP055113781,<br>Retrieved from the Internet:<br>URL:http://e-collection.library.ethz.ch/eserv/eth:7540/eth-7540-01.pdf<br>[retrieved on 2014-04-11]<br>* paragraph [0002] *<br>----- | 1-6 | INV.<br>H04L9/08<br>H04L9/30 |
| A | SHUCHENG YU ET AL: "Achieving Secure, Scalable, and Fine-grained Data Access Control in Cloud Computing",<br>INFOCOM, 2010 PROCEEDINGS IEEE, IEEE, PISCATAWAY, NJ, USA,<br>14 March 2010 (2010-03-14), pages 1-9, XP031675061,<br>ISBN: 978-1-4244-5836-3<br>* paragraph [0003] *<br>----- | 1-6 | |
| A | ZI LIN ET AL: "Efficient Private Proximity Testing with GSM Location Sketches",<br>2 March 2012 (2012-03-02), FINANCIAL CRYPTOGRAPHY AND DATA SECURITY, SPRINGER BERLIN HEIDELBERG, BERLIN, HEIDELBERG, PAGE(S) 73 - 88, XP047013852,<br>ISBN: 978-3-642-32945-6<br>* paragraph [0003] *<br>-----<br><br>-/-- | 1-6 | TECHNICAL FIELDS SEARCHED (IPC)<br><br>H04L |

The present search report has been drawn up for all claims

| Place of search | Date of completion of the search | Examiner |
|---|---|---|
| Munich | 11 April 2014 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                 

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 00 5596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PHILIP MACKENZIE ET AL: "Alternatives to Non-malleability: Definitions, Constructions, and Applications", 23 March 2004 (2004-03-23), THEORY OF CRYPTOGRAPHY; [LECTURE NOTES IN COMPUTER SCIENCE;;LNCS], SPRINGER-VERLAG, BERLIN/HEIDELBERG, PAGE(S) 171 - 190, XP019002648, ISBN: 978-3-540-21000-9 * paragraph [0004] * | 1-6 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 11 April 2014 | Bec, Thierry |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ABDALLA ; M. BELLARE ; P. ROGAWAY.** The oracle diffie-hellman assumptions and an analysis of DHIES. *The Cryptographer's Track at RSA Conference (CT-RSA),* 2001, 143-158
- **M. BLAZE ; G. BLEUMER ; M. STRAUSS.** Divertible protocols and atomic proxy cryptography. *International Conference on the Theory and Application of Cryptographic Techniques (EUROCRYPT),* 1998, 127-144
- **P. MACKENZIE ; M. REITER ; K. YANG.** Alternatives to non-malleability: Definitions, constructions. *Theory of Cryptography (TCC),* 2004, 171-190
- **B. SCHNEIER ; D. WHITING.** A performance comparison of the five aes finalists. *AES Candidate Conference,* 2000, 123-135
- **Z. WANG ; R. MURMURIA ; A. STAVROU.** Implementing and optimizing an encryption file system on android. *IEEE International Conference on Mobile Data Management (MDM),* 2012, 52-62